# EUROPEAN PATENT APPLICATION

(11) **EP 3 162 655 A1**
(43) Date of publication of application: **03.05.2017**
(21) Application number: 16190637.5
(22) Date of filing: 26.09.2016
(51) Int. Cl.: B62D 1/181

(54) **STEERING DEVICE OF VEHICLE**

(30) Priority: 30.10.2015 JP 2015215129
(71) Applicant: AISIN SEIKI KABUSHIKI KAISHA, Kariya-shi Aichi-ken 448-8650 (JP)
(72) Inventor: KATO, Ken, Kariya-shi, Aichi-ken,, 448-8650 (JP)
(74) Representative: Winter, Brandl, Fürniss, Hübner, Röss, Kaiser, Polte - Partnerschaft mbB

(57) **Abstract**

A steering device of a vehicle includes a main housing (2), a movable column member (3), a steering shaft (4) being provided in the movable column member (3), a link mechanism (LM) being swingably supported about a first pivot shaft (P1) relative to a fixed bracket (1), the link mechanism (LM) being swingably supported about a second pivot shaft (P2) relative to the main housing (2), an electric tilt mechanism (MT) adjusting the steering shaft (4) at a predetermined tilt angle by operating the link mechanism (LM), and at least first and second bearing members (B1, B2) that are provided between the main housing (2) and the movable column member (3), one of the first and second bearing members (B1, B2) being disposed rearwardly of a vehicle body (V) relative to the other of the first and second bearing members (B1, B2), the one including a part that is arranged within a surface (PB) including the second pivot shaft (P2) and being orthogonal to an axis of the steering shaft (4).

## Description

### TECHNICAL FIELD

This disclosure generally relates to a steering device of a vehicle.

### BACKGROUND DISCUSSION

A known steering device of a vehicle including an electric tilt mechanism adjusting an angle of a steering shaft to a desired tilt angle, is disclosed, for example, in JP2009-96409A (hereinafter referred to as Patent reference 1). The electric tilt steering device disclosed in Patent reference 1 includes a jacket rotatably supporting a steering shaft. The jacket is swingably mounted on a vehicle body via a first swing shaft. A swing arm is rotatably supported on the vehicle body via a second swing shaft that is disposed substantially parallel to the first swing shaft. A first side of the swing arm in a rotational direction is rotatably connected to the jacket. A tilt screw that is disposed substantially parallel to the jacket is rotatably supported on the jacket. The tilt screw is connected to a motor and is threadedly connected to a movable nut member. A second side of the swing arm in the rotational direction is connected to the movable nut member. A first end of the tilt screw is rotatably supported on the jacket via a restriction device in an axial direction. An inner circumferential surface of a second end of the tilt screw is provided with an internal spline. The motor is connected to an output rotational shaft that is provided with an external spline. The external spline of the output rotational shaft meshes with the internal spline of the tilt screw such that the output rotational shaft is movable in the axial direction. The effect of the invention disclosed in Patent reference 1 is described such that because only the first end of the tilt screw is rotatably supported on the jacket and the second end of the tilt screw is splined to the output rotational shaft, a compression force does not act on the tilt screw and, unlike the known electric tilt steering device, a rotational resistance is not applied to the tilt screw (described in Paragraphs [0008], [0009] of Patent reference 1).

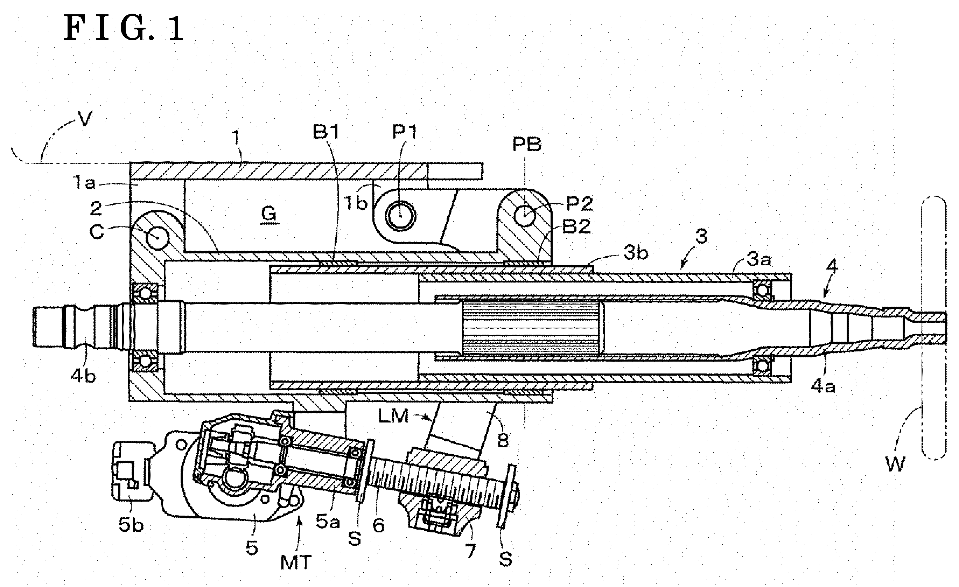

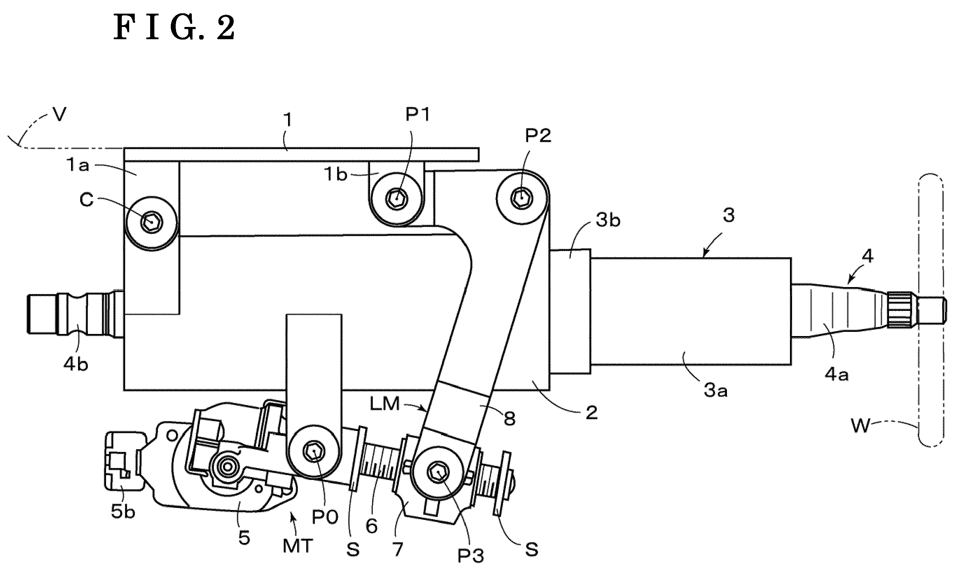

According to the electric tilt steering device disclosed in Patent reference 1, a movable column member (an upper jacket shown in Fig. 1 of Patent reference 1) is movably retained at a main housing (a lower jacket shown in Fig. 1 of Patent reference 1) in an axial direction via a bearing member (a bush member shown in Fig. 1 of Patent reference 1). A link mechanism (a swing arm shown in Fig. 2 of Patent reference 1) is swingably supported about a pivot shaft (a second rotational shaft in Fig. 2 of Patent reference 1). Such connection structure is employed in a known steering device. In a case where a load (for example, an impact load) is applied in a direction orthogonal to an axis of the steering shaft, because the load is inputted as a bending moment applied between the bearing member and a pivot shaft relative to the main housing, a structure or a material that may deal with the bending moment is desired at at least a position close to the bearing member. Accordingly, the weight of the steering device is difficult to be reduced.

A need thus exists for a steering device of a vehicle that may further reduce the weight of a main housing.

### SUMMARY

According to an aspect of this disclosure, a steering device of a vehicle includes a fixed bracket being fixed to a vehicle body, a main housing being swingably supported relative to the fixed bracket, the main housing serving as a case extending in front-rear directions of the vehicle body and including first and second opening portions disposed at opposing ends of the main housing in the front-rear directions, a movable column member serving as a cylindrical body being provided in the main housing via the first opening portion of the main housing, a steering shaft being provided in the movable column member, the steering shaft being movably supported relative to the main housing in an axial direction of the steering shaft along with the movable column member, a link mechanism being swingably supported about a first pivot shaft relative to the fixed bracket, the link mechanism being swingably supported about a second pivot shaft relative to the main housing, each of the first and second pivot shafts being disposed orthogonal to an axis of the steering shaft, an electric tilt mechanism adjusting the steering shaft at a predetermined tilt angle by operating the link mechanism, and at least first and second bearing members that are provided between the main housing and the movable column member, one of the first and second bearing members being disposed rearwardly of the vehicle body relative to the other of the first and second bearing members, the one including a part that is arranged within a surface including the second pivot shaft and being orthogonal to the axis of the steering shaft.

According to the aforementioned construction, the steering device including the electric tilt mechanism includes the at least first and second bearing members that are disposed between the main housing and the movable column member. One of the at least first and second bearing members is disposed rearwardly of the vehicle relative to the other of the first and second bearing members. Because the one includes the surface including the second pivot shaft and being orthogonal to the axis of the steering shaft, the load applied in the direction orthogonal to the axis, the load inputted to the main housing, is applied to the second bearing member as the tensile force or the compression force. Accordingly, the bending moment at a position close to the second bearing member of the main housing may be inhibited from occurring. As a result, the material of the main housing may be thinner than the known device, or may be changed to a material having low specific gravity. Accordingly, the weight of the main housing may further be reduced.

According to another aspect of this disclosure, the fixed bracket and the main housing are formed with a clearance in a direction orthogonal to the axis of the steering shaft, and the first and second pivot shafts are disposed at the clearance.

According to the construction of the steering device, because the fixed bracket 1 and the main housing are formed with the clearance n the direction orthogonal to the axis of the steering shaft and the first and second pivot shafts are disposed at the clearance, the bending moment may be securely inhibited from occurring and the space may be saved.

According to further aspect of this closure, each of the at least first and second bearing members corresponds to a metal-made slide bearing.

According to the construction of the steering device, the stiffness of the first and second bearing members may be maintained.

According to still further aspect of this disclosure, the electric tilt mechanism includes an electric motor being swingably supported on the main housing, a tilt screw shaft being rotationally driven by the electric motor, and a nut member being threaded onto the tilt screw shaft while being rotatably supported on the link mechanism, the nut member moving in the axial direction in response to a rotation of the nut member about an axis of the tilt screw shaft.

According to the construction of the steering device, the electric tilt mechanism may be easily and appropriately mounted on the main housing and the link mechanism.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a lateral cross-sectional view of a steering device according to an embodiment disclosed here;
Fig. 2 is a side view of the steering device according to the embodiment; and
Fig. 3 is a perspective view of the steering device according to the embodiment.

### DETAILED DESCRIPTION

A desirable embodiment of a disclosure will hereunder be explained with reference to the drawings. Figs. 1 and 2 illustrate a whole structure of a steering device according to the embodiment of the disclosure. The steering device includes a fixed bracket 1, a main housing 2, a movable column member 3, and a steering shaft 4. The fixed bracket 1 is fixed to a vehicle body V. The main housing 2 is swingably supported relative to the fixed bracket 1 and serves as a case extending in front-rear direction of the vehicle body V and including first and second opening portions being disposed at opposing ends of the main housing 2 in the front-rear directions. Here, the front-rear directions of the vehicle body V may include directions of the vehicle body V that is inclined relative to a road surface in addition to the directions of the vehicle body V that is in parallel to the road surface. The movable column member 3 serving as a cylindrical body is provided in the main housing 2 via the first opening portion of the main housing 2. The steering shaft 4 is provided in the movable column member 3 and is movably supported on the main housing 2 in the axial direction along with the movable column member 3. The steering device further includes a link mechanism LM and an electric tilt mechanism MT. The link mechanism LM is swingably supported about a first pivot shaft P1 relative to the fixed bracket 1, and is about a second pivot shaft P2 relative to the main housing 2. Each of the first and second pivots shafts P1, P2 is orthogonal to an axis of the steering shaft 4. The electric tilt mechanism MT adjusts the steering shaft 4 at a desirable tilt angle by operating the link mechanism LM. The electric tilt mechanism MT adjusts the steering shaft 4 at the desirable tilt angle in response to the operation of the link mechanism LM and adjusts the operation position of a steering wheel W.

The steering shaft 4 of the embodiment includes an upper shaft 4a and a lower shaft 4b. The upper shaft 4a is formed in a cylindrical shape and includes a rear end portion being connected to the steering wheel W. The lower shaft 4b is splined to a front end portion of the upper shaft 4a. The steering shaft is supported in the main housing via the movable column member 3. The upper shaft 4a and the lower shaft 4b are relatively and movably connected with each other in the axial direction. A front end portion of the lower shaft 4b is connected to a wheel-turning mechanism. The steering wheel W operates the wheel-turning mechanism that turns wheels via a wheel steering mechanism.

According to the embodiment, first and second bearing members B1, B2 are provided between the main housing 2 and the movable column member 3. A part of the second bearing member B2 that is disposed at a rear of the vehicle body V (a position close to the steering wheel W) includes the second pivot shaft P2 and is disposed within a surface PB orthogonal to the axis of the steering shaft 4. According to the embodiment, each of the first and second bearing members B1, B2 corresponds to a metal-made slide bearing. Alternatively, the slide members B1, B2 may be made of resin. The first and second pivot shafts P1, P2 are disposed at a clearance (G in Fig. 1) in a direction orthogonal to the axis of the steering shaft 4, the clearance being formed between the fixed bracket 1 and the main housing 2. Similarly to the known steering device, the movable column member 3 includes an upper tube (an inner tube) 3a and a lower tube (an outer tube) 3b in which the upper tube 3a is press-fitted.

The electric tilt mechanism MT of the embodiment includes an electric motor 5, a tilt screw shaft 6, and a nut member 7. The electric motor 5 is rotatably supported on the main housing about an output rotational shaft. The tilt screw shaft 6 corresponds to a trapezoidal screw that is rotatably driven by the electric motor 5. The nut member 7 is threaded on the tilt screw shaft 6 and moves in the axial direction in response to the rotation about an axis of the tilt screw shaft 6. The link mechanism LM is swingably supported on the nut member 7 and is swingably supported relative to the fixed bracket 1 and the main housing 2.

The electric motor 5 includes a reduction gear 5a and a connector portion 5b, and is rotatably supported about a motor pivot shaft *(P0 in Fig. 2). The reduction gear 5a includes, for example, a worm shaft and a worm wheel. The output rotational shaft of the electric motor 5 is connected to the tilt screw shaft 6 via the reduction gear 5a. An output torque of the electric motor 5 is appropriately controlled and is transmitted to the nut member 7. The nut member 7 is also referred to as a tilt nut, or a tilt slider, and opposing end portions of the nut member 7 in the axial direction are provided with stoppers S, S.

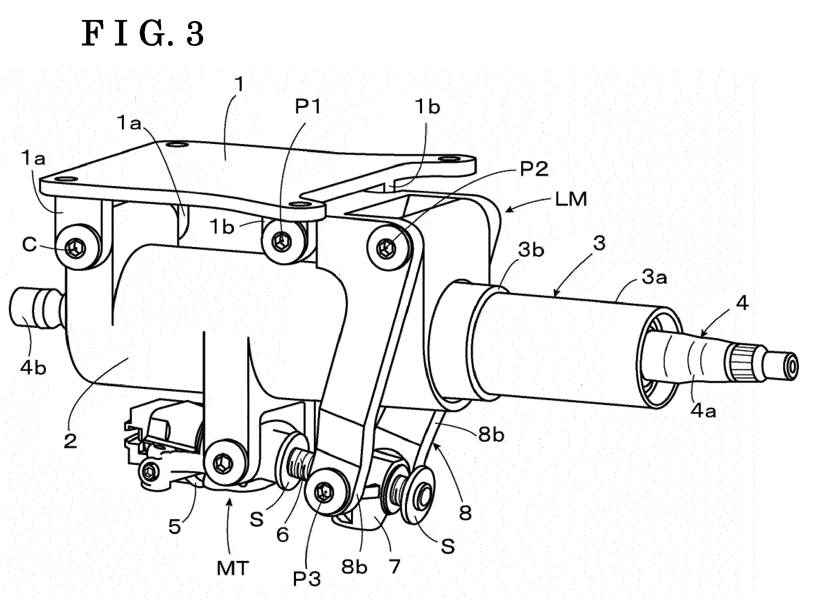

As shown in Fig. 3, the link mechanism LM of the embodiment corresponds to a bellcrank mechanism including a link member 8 that is formed in a L shape when viewed from a side, and in a π shape when viewed from a front. The link member 8 is disposed at the steering shaft 4 in a bilateral symmetrical manner, and is rotatably supported on a pair of leg portions 1 b, 1 b of the fixed bracket 1 about the first pivot shaft P1. The nut member 7 is disposed between a pair of L-shaped leg portions 8b, 8b of the link member 8, and is rotatably supported about a third pivot shaft P3. As such, the link member 8 is rotatably supported about the third pivot shaft P3 relative to the nut member 7. As described above, the link member 8 is rotatably supported about the first pivot shaft P1 relative to the fixed bracket 1, and is rotatably supported about the second pivot shaft P2 relative to the main housing 2.

In the electric tilt mechanism MT, when the electric motor 5 rotates, the tilt screw shaft 6 rotates about the axis, and the nut member 7 moves in the axial direction of the tilt screw shaft 6 in response to the rotation of the tilt screw shaft 6. Along with this, the link member 8 swings about the first pivot shaft P1, and the main housing 2 (with the movable column member 3, the steering shaft 4 and the steering wheel W) swings about a swing center C. Accordingly, the steering wheel W moves in upper-lower directions of the vehicle body V.

As such, when the steering wheel W moves upwardly of the vehicle bod V, the electric motor 5 rotates (for example, normal rotation). The nut member 7 moves in the axial direction toward the motor pivot shaft P0 (in a direction adjacent to the motor pivot shaft P0) while rotating about the motor pivot shaft P0 (with the tilt screw shaft 6) along the tilt screw shaft 6 in response to the rotation of the electric motor 5. As a result, the main housing 2 (with the movable column member 3, the steering shaft 4 and the steering wheel W) swings (rakes up) in the anti-clockwise direction about the swing center C. The operational position of the steering wheel W is tilted or inclined upwardly about the swing center C from a neutral position by a predetermined angle (for example, an angle α), and comes to be at the top level.

On the other hand, when the steering wheel W moves downwardly of the vehicle body V, the electric motor 5 rotates in a reverse direction. The nut member 7 (and the tilt screw shaft 6) moves in the axial direction away from the motor pivot shaft P0 (in a direction away from the motor pivot shaft P0, in the right direction in Fig. 1) while rotating about the motor pivot shaft P0 in response to the rotation of the electric motor 5. As a result, the main housing 2 (with the movable column member 3, the steering shaft 4, and the steering wheel W) swings (rakes down) in the clockwise direction about the swing center C via the link mechanism LM. The operational position of the steering wheel W is tilted or inclined downwardly about the swing center C from the neutral position by a predetermined angle (for example, an angle β), and comes to be at the bottom level.

When a load (for example, an impact load) is applied in a direction orthogonal to the axis of the steering shaft 4 from a side where the steering wheel W is positioned, because, as described above, a part of the second bearing member B2 is disposed within the surface PB including the second pivot shaft P2 and being orthogonal to the axis of the steering shaft 4, the load is applied to the second bearing member B2 as a tensile force or a compression force. Accordingly, the bending moment at a position close to the second bearing member B2 may be inhibited from occurring. As a result, the material of the main housing 2 may be thinner than the known device, or may be changed to a material having low specific gravity, for example, light metal or resin. Accordingly, the weight of the main housing 2 may further be reduced. Moreover, because the first and second pivot shafts P1, P2 are disposed at the clearance G in Fig. 1, the bending moment may be securely inhibited from occurring and the space may be saved.

Alternatively, the steering device shown in Fig. 1 may include a telescopic mechanism. For example, an electric telescopic mechanism may be implemented along with the electric tilt mechanism MT. Accordingly, the movable column member 3, the steering shaft 4 and the steering wheel W may integrally move in the axial direction relative to the main housing 2. As a result, the steering wheel W may be adjusted at a desired position in the front-rear directions of the vehicle body V.

## Claims

1. A steering device of a vehicle, comprising:
a fixed bracket (1) being fixed to a vehicle body (V);
a main housing (2) being swingably supported relative to the fixed bracket (1), the main housing (2) serving as a case extending in front-rear directions of the vehicle body (V) and including first and second opening portions disposed at opposing ends of the main housing (2) in the front-rear directions;
a movable column member (3) serving as a cylindrical body being provided in the main housing (2) via the first opening portion of the main housing (2);
a steering shaft (4) being provided in the movable column member (3), the steering shaft (4) being movably supported relative to the main housing (2) in an axial direction of the steering shaft (4) along with the movable column member (3);
a link mechanism (LM) being swingably supported about a first pivot shaft (P1) relative to the fixed bracket (1), the link mechanism (LM) being swingably supported about a second pivot shaft (P2) relative to the main housing (2), each of the first and second pivot shafts (P1, P2) being disposed orthogonal to an axis of the steering shaft (4);
an electric tilt mechanism (MT) adjusting the steering shaft (4) at a predetermined tilt angle by operating the link mechanism (LM); and
at least first and second bearing members (B1, B2) that are provided between the main housing (2) and the movable column member (3), one of the first and second bearing members (B1, B2) being disposed rearwardly of the vehicle body (V) relative to the other of the first and second bearing members (B1, B2), the one including a part that is arranged within a surface (PB) including the second pivot shaft (P2) and being orthogonal to the axis of the steering shaft (4).

2. The steering device of the vehicle according to claim 1, wherein
the fixed bracket (1) and the main housing (2) are formed with a clearance (G) in a direction orthogonal to the axis of the steering shaft (4), and
the first and second pivot shafts (P1, P2) are disposed at the clearance (G).

3. The steering device of the vehicle according to either claim 1 or 2, wherein
each of the at least first and second bearing members (B1, B2) corresponds to a metal-made slide bearing.

4. The steering device of the vehicle according to one of claims 1 to 3, wherein the electric tilt mechanism (MT) includes:
an electric motor (5) being swingably supported on the main housing (2);
a tilt screw shaft (6) being rotationally driven by the electric motor (5); and
a nut member (7) being threaded onto the tilt screw shaft (6) while being rotatably supported on the link mechanism (LM), the nut member (7) moving in the axial direction in response to a rotation of the nut member (7) about an axis of the tilt screw shaft (6).
